(19) Europäisches Patentamt
European Patent Office
Office européen des brevets

(11) **EP 4 492 181 A1**

(12) **EUROPÄISCHE PATENTANMELDUNG**

(43) Veröffentlichungstag:
**15.01.2025 Patentblatt 2025/03**

(51) Internationale Patentklassifikation (IPC):
***G05D 1/20*** (2024.01)

(21) Anmeldenummer: **24177892.7**

(22) Anmeldetag: **24.05.2024**

(52) Gemeinsame Patentklassifikation (CPC):
**G05D 1/2297; G05D 1/6484;** G05D 2105/15;
G05D 2107/21; G05D 2109/10

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **14.07.2023 DE 102023118716**

(71) Anmelder: **Maschinenfabrik Bernard Krone GmbH & Co. KG**
**48480 Spelle (DE)**

(72) Erfinder:
• **Grever, Alexander**
**49078 Osnabrück (DE)**
• **Schröer, Christian**
**48485 Neuenkirchen (DE)**

(54) **VERFAHREN ZUR FAHRROUTENPLANUNG**

(57) Die Erfindung betrifft ein Verfahren zur Fahrroutenplanung für eine Feldbearbeitung, bei welcher eine Landmaschine (10) einen Bearbeitungsbereich (20) bearbeitet. Um eine effiziente landwirtschaftliche Bearbeitung eines unbekannten Bearbeitungsbereichs zu ermöglichen, ist erfindungsgemäß vorgesehen, dass
- ein Primärbereich (23) des Bearbeitungsbereichs (20) von der Landmaschine manuell gesteuert durchfahren wird, wobei automatisch Positionsdaten der Landmaschine (10) ermittelt werden (S100),
- basierend auf den Positionsdaten automatisch eine den Primärbereich (23) umgebende Primärgrenze ($G_1$) wenigstens teilweise ermittelt wird (S110),
- eine außerhalb des Primärbereichs (23) angeordnete Sekundär-Außengrenze ($A_2$) eines Sekundärbereichs (24) festgelegt wird (S130, S160), die in zwei Anschlusspunkten ($P_A$) auf die Primärgrenze ($G_1$) trifft, wobei ein zwischen den Anschlusspunkten ($P_A$) liegender Teil der Primärgrenze ($G_1$) eine Innengrenze (I) zwischen Primärbereich (23) und Sekundärbereich (24) bildet, die zusammen mit der Sekundär-Außengrenze ($A_2$) den Sekundärbereich (24) vollständig umgibt,
- automatisch eine Fahrroute ($F_1$-$F_3$) zur Bearbeitung wenigstens des Sekundärbereichs (24) ermittelt wird (S190), und
- automatisch Steuerdaten (D) zur Steuerung der Landmaschine (10) während der Feldbearbeitung erzeugt werden (S210), wobei die Steuerdaten (D) eine ermittelte Fahrroute ($F_1$-$F_3$) repräsentieren.

Fig.2

EP 4 492 181 A1

**Beschreibung**

Die vorliegende Erfindung betrifft ein Verfahren zur Fahrroutenplanung nach dem Oberbegriff von Anspruch 1, ein Computersystem zur Fahrroutenplanung nach dem Oberbegriff von Anspruch 15, eine Landmaschine nach dem Oberbegriff von Anspruch 16 sowie ein Computerprogrammprodukt nach Anspruch 17.

Bei der Bearbeitung einer landwirtschaftlichen Nutzfläche, zum Beispiel eines gegebenen Bearbeitungsbereichs, fährt eine Landmaschine die gesamte Fläche in mehreren Fahrspuren nach und nach ab. In einem Innenbereich können zum Beispiel parallele Fahrspuren genutzt werden. Zum Wechsel zwischen den parallelen Fahrspuren sind Wendewege notwendig, die in einem Vorgewende durchfahren werden, welches randseitig des Innenbereichs angeordnet ist. Im Fall einer Erntemaschine, zum Beispiel eines Mähdreschers oder Feldhäckslers, wird üblicherweise zunächst das Vorgewende bearbeitet, also abgeerntet, und danach der Innenbereich. Somit wird ein unnötiges Überfahren von unbearbeitetem Bestand im Vorgewende vermieden. Es ist grundsätzlich bekannt, für einen Bearbeitungsbereich mit bekannten Abmessungen eine Fahrroute zu planen, die dann entweder manuell oder auch wenigstens teilweise autonom von der Landmaschine durchfahren werden kann. Eine besondere Herausforderung bedeutet hingegen die Bearbeitung eines Feldes mit unbekannten Abmessungen, was in der Praxis regelmäßig vorkommt. In diesem Fall fehlen zunächst die notwendigen Informationen, anhand derer eine Routenplanung durchgeführt werden könnte.

Aufgabe der Erfindung ist es, eine effiziente landwirtschaftliche Bearbeitung eines unbekannten Bearbeitungsbereichs zu ermöglichen.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren geschaffen zur Fahrroutenplanung für eine Feldbearbeitung, bei welcher eine Landmaschine einen Bearbeitungsbereich bearbeitet, wobei

- ein Primärbereich des Bearbeitungsbereichs von der Landmaschine manuell gesteuert durchfahren wird, wobei automatisch Positionsdaten der Landmaschine ermittelt werden,
- basierend auf den Positionsdaten automatisch eine den Primärbereich umgebende Primärgrenze wenigstens teilweise ermittelt wird,
- eine außerhalb des Primärbereichs angeordnete Sekundär-Außengrenze eines Sekundärbereichs festgelegt wird, die in zwei Anschlusspunkten auf die Primärgrenze trifft, wobei ein zwischen den Anschlusspunkten liegender Teil der Primärgrenze eine Innengrenze zwischen Primärbereich und Sekundärbereich bildet, die zusammen mit der Sekundär-Außengrenze den Sekundärbereich vollständig umgibt,
- automatisch eine Fahrroute zur Bearbeitung wenigstens des Sekundärbereichs ermittelt wird, und
- automatisch Steuerdaten zur Steuerung der Landmaschine während der Feldbearbeitung erzeugt werden, wobei die Steuerdaten eine ermittelte Fahrroute repräsentieren.

Das Verfahren ist zur Fahrroutenplanung für eine Feldbearbeitung vorgesehen, bei welcher eine Landmaschine einen Bearbeitungsbereich bearbeitet. Die Landmaschine kann auch als landwirtschaftliche Arbeitsmaschine bezeichnet werden. Dies schließt ausdrücklich auch Gespanne ein, mit einem Schlepper und wenigstens einer hiervon gezogenen oder getragenen Maschine wie beispielsweise einem Anhänger. Die Landmaschine kann insbesondere eine Erntemaschine wie ein Feldhäcksler, ein Mähdrescher, eine Ballenpresse oder ein Ladewagen sein. Es könnte sich aber auch zum Beispiel um einen Traktor mit einem Zetter, einem Pflug, einem Düngerstreuer, einem Güllefass oder dergleichen handeln. Im Rahmen der Feldbearbeitung bearbeitet die Landmaschine einen Bearbeitungsbereich, zum Beispiel einen Acker, ein Feld oder einen Teil desselben, wobei zur Vereinfachung die Begriffe "Feld" und "Acker" gleichbedeutend verwendet werden. Im Bearbeitungsbereich erfolgt die Feldbearbeitung, zum Beispiel Pflügen, Düngen, Mähen, Zetten, Erntegutaufnahme oder dergleichen, was nicht zwangsläufig bedeutet, dass der gesamte Bearbeitungsbereich bearbeitet wird, wenngleich dies wünschenswert ist.

Das Verfahren weist die nachfolgend genannten Schritte auf, wobei diese ausdrücklich nicht zwangsläufig in der genannten Reihenfolge ausgeführt werden müssen. Die zeitliche Abfolge zweier Schritte kann gegenüber der Reihenfolge ihrer Nennung umgekehrt sein. Ebenso ist es möglich, dass zwei Schritte ganz oder teilweise zeitlich parallel ausgeführt werden.

Gemäß einem Verfahrensschritt wird ein Primärbereich des Bearbeitungsbereichs von der Landmaschine manuell gesteuert durchfahren, wobei automatisch Positionsdaten der Landmaschine ermittelt werden. Der Primärbereich ist ein Teil des Bearbeitungsbereichs, wobei die Bezeichnung "Primärbereich" vornehmlich zur Unterscheidung dient und nicht einschränkend auszulegen ist. Der Primärbereich wird von der Landmaschine durchfahren, wobei er insbesondere auch bearbeitet werden kann. Dabei wird die Landmaschine manuell gesteuert, das heißt durch Steueraktionen eines Benutzers. Hierbei kann es sich um einen Fahrer handeln, der auf der Landmaschine mitfährt. Es kann aber auch jemand sein, der die Landmaschine fernsteuert. Der Benutzer stellt durch die manuelle Steuerung sicher, dass sich die Landmaschine innerhalb des Bearbeitungsbereichs bewegt, und zwar innerhalb des Primärbereichs. Man kann umgekehrt auch davon sprechen, dass durch die Bewegungen der Landmaschine in diesem Verfahrensschritt der Primärbereich definiert wird. Beim Durchfahren des Primärbereichs werden automatisch Positionsdaten ermittelt. Hierbei handelt es sich allgemein um Daten, die einer Position der Landmaschine entsprechen. Es kann sich um eine absolute Position handeln (zum Beispiel GPS-Koordinaten) oder um eine Relativposition gegenüber einem bekannten Bezugspunkt. Insbesondere kann ein GNSS-Empfänger genutzt werden, um die aktuelle Position der Landmaschine festzustellen. Die Positionsdaten werden automatisch ermittelt, also ohne menschliches Zutun. Sie können auch gespeichert werden. Diese und weitere automatisch erfolgenden Aktionen können durch ein Computersystem durchgeführt werden, dessen Funktionen selbstverständlich teilweise softwaremäßig implementiert sein können. Die Positionsdaten können außer einer Flächen- oder Raumposition der Landmaschine auch Informationen über ihre Ausrichtung enthalten, also zum Beispiel einen Horizontalwinkel bzw. Azimutalwinkel. Zusätzlich zu den Positionsdaten kann ermittelt werden, ob bei einer bestimmten Position eine Bearbeitung stattfindet, also ob ein Bearbeitungsorgan der Landmaschine aktiv ist. Sofern beim Durchfahren eine Bearbeitung stattfindet, kann der Primärbereich als die gesamte bearbeitete Fläche definiert werden.

Des Weiteren wird basierend auf den Positionsdaten automatisch eine den Primärbereich umgebende Primärgrenze wenigstens teilweise ermittelt. Das heißt die Positionsdaten werden genutzt, um die Grenze des Primärbereichs, welche hier als Primärgrenze bezeichnet wird, ganz oder teilweise zu ermitteln. Auch dies erfolgt automatisch, zum Beispiel durch das oben genannte Computersystem. Im Fall einer teilweisen Ermittlung wird nur ein Abschnitt der Primärgrenze ermittelt, was in einigen Fällen ausreichend ist. Die Primärgrenze kann unmittelbar aus den Positionsdaten abgeleitet werden. Es ist allerdings insbesondere im Fall einer Bearbeitung des Primärbereichs sinnvoll, die Geometrie der Landmaschine zu berücksichtigen, insbesondere eine Arbeitsbreite, auf welcher das Bearbeitungsorgan auf den Bearbeitungsbereich einwirkt.

In einem weiteren Schritt wird eine außerhalb des Primärbereichs angeordnete Sekundär-Außengrenze eines Sekundärbereichs festgelegt, die in zwei Anschlusspunkten auf die Primärgrenze trifft, wobei ein zwischen den Anschlusspunkten liegender Teil der Primärgrenze eine Innengrenze zwischen Primärbereich und Sekundärbereich bildet, die zusammen mit der Sekundär-Außengrenze den Sekundärbereich vollständig umgibt. Die Festlegung der Sekundär-Außengrenze kann benutzerseitig oder automatisch erfolgen, wie nachfolgend noch erläutert wird. Sie ist Teil einer Sekundärgrenze, die einen Sekundärbereich vollständig umgibt. Dabei wird die Sekundär-Außengrenze stets so festgelegt, dass sie mit der Primärgrenze in zwei Anschlusspunkten verbunden ist, das heißt mit dieser zusammentrifft. Die Primärgrenze muss im vorgenannten Schritt zumindest so weit ermittelt werden, dass dies die Anschlusspunkte mit einbezieht. Ein Teil der Primärgrenze, welcher zwischen den Anschlusspunkten liegt, bildet eine Innengrenze. Die Bezeichnung rührt daher, dass diese im Inneren des Bearbeitungsbereichs liegt, während die Sekundär-Außengrenze (ebenso wie eine Primär-Außengrenze des Primärbereichs) den Bearbeitungsbereich nach außen hin begrenzt. Das heißt der Sekundärbereich grenzt mit der Innengrenze an den Primärbereich, während er mit der Sekundär-Außengrenze an die Umgebung des Bearbeitungsbereichs grenzt. Er ist somit nicht vollständig vom Primärbereich umgeben. Es erfolgt daher beim Befahren des Primärbereichs in keinem Fall ein vollständiges Umfahren des Sekundärbereichs. Dementsprechend kann durch das Befahren des Primärbereichs die Sekundärgrenze, also die Grenze des Sekundärbereichs auch nicht vollständig bestimmt oder festgelegt werden. Daher ein Teil derselben, nämlich die Sekundär-Außengrenze, eigens in diesem Verfahrensschritt festgelegt, und zwar unabhängig von den Positionsdaten.

In einem weiteren Schritt, der bevorzugt nach den oben genannten Schritten ausgeführt wird, wird automatisch eine Fahrroute zur Bearbeitung wenigstens des Sekundärbereichs ermittelt. Die Fahrroute wird automatisch ermittelt, also zum Beispiel durch das oben genannte Computersystem, ohne dass menschliche Gedankentätigkeit hierzu notwendig ist. Die Fahrroute dient wenigstens zur Bearbeitung des Sekundärbereichs, wobei dieser nicht vollständig bearbeitet werden muss, wenngleich eine möglichst vollständige Bearbeitung vorteilhaft ist. Bei der Ermittlung der Fahrroute wird selbstverständlich genutzt, dass die Sekundärgrenze, bestehend aus Innengrenze und Sekundär-Außengrenze, vollständig bekannt ist. Somit kann eine Fahrroute ermittelt werden, die an die Geometrie des Sekundärbereichs angepasst ist.

In einem weiteren Verfahrensschritt werden automatisch Steuerdaten zur Steuerung der Landmaschine während der Feldbearbeitung erzeugt, welche Steuerdaten die ermittelte Fahrroute repräsentieren. Die Steuerdaten enthalten in jedem Fall die Informationen, die zum Steuern der Landmaschine entlang der Fahrroute notwendig sind. Beim Feldbearbeitung kann die Landmaschine entsprechend der Steuerdaten gesteuert werden. Der Begriff "steuern" bezieht sich hier allgemein auf jede gezielte Beeinflussung von Ausrichtung und/oder Bewegungszustand der Landmaschine, also zum Beispiel Lenken, Beschleunigen, Abbremsen etc. Optional können sich die Steuerdaten auch teilweise auf andere Funktionen der Landmaschine beziehen, zum Beispiel eine Steuerung eines Hubwerks. Jedenfalls kann die Landmaschine anhand der Steuerdaten so gesteuert werden, dass sie idealerweise der ermittelten Fahrroute folgt. Das Format der Steuerdaten sowie deren Inhalt können unterschiedlich gewählt werden, insbesondere in Abhängigkeit von der jeweiligen Landmaschine sowie gegebenenfalls weiteren zur Umsetzung des Verfahrens eingesetzten Komponenten. Insbesondere kann die Fahrroute durch eine mehr oder weniger dichte Folge von Wegpunkten repräsentiert sein. Es können auch explizite Lenkanweisungen in den Steuerdaten enthalten sein, oder lediglich Positionsangaben für Wegpunkte, wobei auf Seiten der Landmaschine die passenden Lenkparameter ermittelt werden, um von einem Wegpunkt zum nächsten zu gelangen.

Durch das Verfahren wird die Bearbeitung eines zu Anfang unbekannten Bearbeitungsbereichs erleichtert. Dabei wird ein Primärbereich zunächst gewissermaßen erkundet, indem er manuell gesteuert durchfahren wird. Da dies allerdings kein vollständiges Umfahren des Sekundärbereichs beinhaltet, müssen Informationen über den Sekundärbereich, nämlich der Verlauf der Sekundär-Außengrenze, anderweitig ergänzt werden. Das Verfahren kann in unterschiedlichen Szenarien von Vorteil sein. So kann es unter Wildschutzaspekten erwünscht sein, den Rand des Bearbeitungsbereichs zunächst nicht vollständig zum befahren und/oder zu bearbeiten, sondern einen unbearbeiteten Bereich zu belassen, der vom Wild als Übergang zu geschützten Bereichen außerhalb des Feldes genutzt werden kann. Es wäre auch denkbar, dass ein Benutzer den Bearbeitungsbereich teilweise festlegen möchte, indem er die Landmaschine manuell hindurchsteuert, während er teilweise eine andere Festlegung für sinnvoller hält. Unter Umständen kann die Festlegung der Sekundär-Außengrenze zeitsparender und/oder genauer sein als beispielsweise ein manuell gesteuertes Durchfahren. Schließlich wird die Routenplanung automatisch durchgeführt, was einem Benutzer, zum Beispiel einem Fahrer, komplexe Überlegungen erspart.

Die Fahrroute wird bevorzugt im Hinblick auf die tatsächlichen Eigenschaften derjenigen Landmaschine geplant, die den Feldbearbeitung ausführen soll. Genauer gesagt, es ist bevorzugt, dass die Fahrroute spezifisch für die ausführende Landmaschine unter Berücksichtigung von Geometrie und/oder Fahreigenschaften der Landmaschine ermittelt wird. Sofern die Landmaschine beim Feldbearbeitung ein Anbaugerät nutzt, welches bei Bedarf demontiert und durch ein anderes Anbaugerät ersetzt werden kann, bezieht der Begriff "Geometrie der Landmaschine" ausdrücklich auch die Geometrie des Anbaugeräts mit ein. Mögliche geometrische Eigenschaften, die berücksichtigt werden können, sind Länge und Breite der Landmaschine, Arbeitsbreite (also die Breite desjenigen Bereichs, in dem tatsächlich Erntegut geerntet wird), aber auch die Lage der Antriebsmittel (Räder, gegebenenfalls aber auch Raupenketten). Um eine realistischere Repräsentation der Landmaschine zu erreichen, kann diese auch zum Beispiel als Polygon simuliert werden. Normalerweise in Kombination mit einer Berücksichtigung der Geometrie, können auch die Fahreigenschaften der Landmaschine berücksichtigt werden. Die Fahreigenschaften können eine mögliche Höchstgeschwindigkeit (gegebenenfalls nach Vorwärts- und Rückwärtsfahrt zu unterscheiden), ein Beschleunigungs- und/oder Bremsvermögen, ein minimaler Kurvenradius, ein maximaler Lenkwinkel, eine Geschwindigkeit einer Lenkwinkeländerung etc. umfassen. Es kann auch danach unterschieden werden, auf welchem Untergrund sich die Landmaschine bewegt, also zum Beispiel ansteigend, eben oder abfallend, trocken oder feucht etc. Durch Berücksichtigung wenigstens einer der genannten Größen ist es zum einen möglich, die fahrtechnischen Möglichkeiten der Landmaschine voll auszuschöpfen, also zum Beispiel einen minimalen Kurvenradius auszunutzen, zum anderen wird vermieden, evtl. Fahrmanöver einzuplanen, die die betreffende Landmaschine gar nicht ausführen kann.

Es ist möglich, dass nach einem festgelegten Schema genau eine Fahrroute bestimmt wird, für die dann Steuerdaten erzeugt werden. Aufgrund der Vielzahl unterschiedlicher Bearbeitungsbereiche, sowie möglicher anderer Variablen, wird eine derart bestimmte Fahrroute nicht (oder allenfalls zufällig) die bestmögliche Fahrroute darstellen, unabhängig davon, woran die "Güte" der Fahrroute beurteilt wird. Um diesbezüglich eine Verbesserung zu erreichen, ist es stark bevorzugt, dass eine automatische Optimierung der Fahrroute durchgeführt wird, indem aus einer Mehrzahl möglicher Fahrrouten eine entsprechend einem Optimierungskriterium optimale Fahrroute ermittelt wird, und automatisch Steuerdaten erzeugt werden, die die optimale Fahrroute repräsentieren. Das heißt, es wird eine Mehrzahl von möglichen Fahrrouten betrachtet, die gewissermaßen Kandidaten für eine optimale Fahrroute darstellen, und es wird anhand eines Optimierungskriteriums zur Fahrroutenoptimierung untersucht, welche dieser Fahrrouten optimal ist. Der Begriff "optimale Fahrroute" ist so zu verstehen, dass dies die beste Fahrroute ist, die entsprechend dem Optimierungskriterium aufgefunden wurde. Unter Umständen könnte tatsächlich eine bessere Fahrroute existieren, die allerdings nicht aufgefunden wurde, beispielsweise weil nicht genügend unterschiedliche Fahrrouten untersucht wurden. Die Optimierung erfolgt automatisch, also maschinell, das heißt computergestützt. Soweit hier und im Folgenden der Begriff "automatisch" verwendet wird, schließt dies insbesondere die Möglichkeit ein, dass die entsprechenden Vorgänge ganz oder teilweise durch Software durchgeführt werden, die auf einer geeigneten Hardware implementiert ist. Dieser Schritt sowie weitere Schritte des Verfahrens können zum Beispiel durch ein Farm-Management-Informationssystem (FMIS) durchgeführt werden.

Bevorzugt basiert das Optimierungskriterium wenigstens teilweise auf einer Optimierung eines Optimierungswerts, der durch Aufsummieren von Beiträgen einzelner Routenabschnitte einer Fahrroute ermittelt wird. Der Optimierungswert kann in vielen Fällen auch als Aufwandswert oder Kostenwert bezeichnet werden, wobei die Optimierung des Optimierungswerts dann in einer Minimierung liegt. Es wäre allerdings auch denkbar, dass, je nach Art oder Definition des Optimierungswerts, die Optimierung in einer Maximierung desselben liegt. Im einfachsten Fall besteht das Optimierungskriterium in einer Minimierung (bzw. Maximierung) des Optimierungswerts. Das heißt diejenige Fahrroute ist optimal, die den Optimierungswert optimiert. Wie nachfolgend noch erläutert wird, könnten aber auch andere Größen, zum Beispiel weitere Optimierungswerte, berücksichtigt werden, so dass die Optimierung des einen Optimierungswerts mit anderen Zielsetzungen konkurriert. In jedem Fall wird der Optimierungswert ermittelt, indem Beiträge einzelner Routenabschnitte einer Fahrroute aufsummiert werden. Der Optimierungswert W lässt sich wie folgt berechnen:

$$W = \sum_j W_j$$

wobei $W_j$ den Beitrag des j-ten Routenabschnitts darstellt und die Summe über j über alle Routenabschnitte läuft.

Bei jeder automatischen Optimierung können unterschiedliche Verfahren zur Auffindung der optimalen Lösung oder zur Suche nach der optimalen Lösung eingesetzt werden, insbesondere metaheuristische Verfahren wie Simulated Annealing oder genetische bzw. evolutionäre Algorithmen.

Gemäß einer Ausgestaltung basiert das Optimierungskriterium wenigstens teilweise auf einer Minimierung einer Fahrstrecke. "Wenigstens teilweise" bedeutet in diesem Zusammenhang, dass die Minimierung der Fahrstrecke nicht das einzige Ziel sein muss, sondern dass auch andere Werte minimiert oder maximiert werden sollen, so dass beispielsweise ein Kompromiss hergestellt wird, der sich von einer alleinigen Minimierung der Fahrstrecke unterscheiden kann. Insbesondere kann vorgesehen sein, die gesamte auf der Fahrroute zurückgelegte Fahrstrecke zu minimieren. Alternativ kann auch vorgesehen sein, die insgesamt für Wendewege notwendige Fahrstrecke zu minimieren. Letztere kann gewissermaßen als "unproduktive" Fahrstrecke angesehen werden.

Alternativ oder zusätzlich kann das Optimierungskriterium wenigstens teilweise auf einer Minimierung einer Fahrzeit basieren. Hierbei kann zum einen die Fahrzeit für die gesamte Fahrroute zugrunde gelegt werden. Es kann aber auch die insgesamt für alle Spurwechsel und/oder Wendeweg notwendige Fahrzeit betrachtet werden, welche wiederum eine "unproduktive" Fahrzeit darstellt. Eine Minimierung der Fahrzeit ist aus unterschiedlichen Gründen nicht zwangsläufig gleichbedeutend mit einer Minimierung der Fahrtstrecke. So könnte es zum Beispiel sein, dass der Bearbeitungsbereich ein Gefälle aufweist, das dazu führt, dass Fahrspuren in einer Richtung schneller durchfahren werden können als in Gegenrichtung. Die Anzahl und individuelle Länge der insgesamt "bergab" oder "bergauf" durchfahrenen Fahrspuren kann sich bei Fahrrouten gleicher Länge unterscheiden und somit auch die Fahrzeit, die insgesamt für die Fahrspuren benötigt wird.

Weiterhin alternativ oder zusätzlich kann das Optimierungskriterium wenigstens teilweise auf einer Minimierung eines Energieverbrauchs basieren. Hierbei wird normalerweise der voraussichtliche Energieverbrauch für die gesamte Fahrroute betrachtet. Dieser hängt von der gesamten Fahrstrecke ab, allerdings evtl. auch von anderen Parametern. So kann der Energieverbrauch auch von der Ausrichtung einzelner Fahrspuren abhängen, wenn die Landmaschine zum Beispiel eine mehr oder weniger starke Steigung bewältigen muss. Auch kann die Anzahl und individuelle Länge der insgesamt "bergab" oder "bergauf" durchfahrenen Fahrspuren kann sich unterscheiden.

Ebenfalls alternativ oder zusätzlich kann das Optimierungskriterium wenigstens teilweise auf einer Minimierung einer unbearbeiteten Fläche basieren. Man kann hier auch von einer Maximierung der Abdeckung oder "Coverage" sprechen. Das heißt es soll ein möglichst großer Teil - im Idealfall 100% - des Bearbeitungsbereichs tatsächlich bearbeitet werden. Man könnte hier auch zwischen einer unbearbeiteten Fläche im Innenbereich und einer unbearbeiteten Fläche im Vorgewende differenzieren. Im Allgemeinen kann zwischen einer Minimierung der unbearbeiteten Fläche und ein Minimierung von Fahrzeit, Fahrstrecke und/oder Energieverbrauch ein Konflikt bestehen, so dass es sinnvoll sein kann, die bearbeitete Fläche mit einzubeziehen, um zu vermeiden, dass zum Beispiel eine geringe Fahrzeit auf Kosten einer unzureichenden Abdeckung erreicht wird.

Eine weitere Möglichkeit besteht darin, dass das Optimierungskriterium wenigstens teilweise auf einer Minimierung mehrfach überfahrener Bereiche basiert. Ein mehrfaches Überfahren eines Bereichs kann zum einen die Bodenverdichtung verstärken, was unerwünscht ist, zum anderen kann es bedeuten, dass am Boden liegendes Erntegut überfahren wird und dabei verschmutzt, beschädigt oder sogar in den Boden eingedrückt wird. Außerdem deutet ein mehrfaches Überfahren unter Umständen auf eine suboptimale Effizienz hin, da zur Bearbeitung ein einmaliges Überfahren ausreicht.

Unter Umständen kann das Optimierungskriterium in einer Minimierung oder Maximierung einer einzelnen Größe oder eines einzelnen Optimierungswertes bestehen, zum Beispiel einer Minimierung der gesamten Fahrstrecke. Je nach Beschaffenheit des Bearbeitungsbereichs, der Art der durchzuführenden Feldbearbeitung, den Leistungsdaten der Landmaschine und anderer Faktoren kann die Minimierung oder Maximierung eines Optimierungswertes bis zu einem gewissen Grad in Konkurrenz mit einer ebenfalls wünschenswerten Minimierung oder Maximierung eines anderen Optimierungswertes stehen. In diesem Fall stellt die isolierte Optimierung eines einzelnen Optimierungswertes oftmals keine zufriedenstellende Lösung dar. Eine Ausgestaltung sieht daher vor, dass das Optimierungskriterium auf der Optimierung einer gewichteten Kombination von Optimierungswerten basiert. Ein Optimierungswert könnte dabei beispielsweise die unbearbeitete Fläche sein, während ein anderer Optimierungswert die Fahrzeit ist. Das Optimierungskriterium könnte dann in der Minimierung einer Summe liegen, wobei ein Summand proportional zur Fahrzeit und ein anderer Summand proportional zur unbearbeiteten Fläche ist. Durch Wahl geeigneter Gewichtungsfaktoren oder Normierungsfaktoren kann das relative Gewicht des jeweiligen Optimierungswertes angepasst werden. Die Summe kann auch als "Gesamt-Optimierungswert" $W_{gesamt}$ angesehen werden, welcher wie folgt definiert ist:

$$W_{gesamt} = \sum_k a_k W_k$$

wobei $W_k$ den k-ten Optimierungswert, zum Beispiel die Fahrstrecke, Fahrzeit etc. bezeichnet und $a_k$ der jeweilige Gewichtungsfaktor ist.

Alternativ kann das Optimierungskriterium auf einer Pareto-Optimierung mehrerer Optimierungswerte basieren. Das heißt es wird - innerhalb eines untersuchten Parameterbereichs - ein Parametersatz gesucht, der die Optimierungswerte insoweit optimiert, als kein anderer Parametersatz einen der Optimierungswerte demgegenüber verbessert, ohne einen anderen zu verschlechtern. Zum Beispiel könnte eine Fahrtroute ein Pareto-Optimum hinsichtlich Fahrzeit und Fahrstrecke darstellen, wenn keine andere Fahrtroute eine kürzere Fahrzeit liefert, ohne eine längere Fahrstrecke zu liefern, und keine andere Fahrtroute eine kürzere Fahrstrecke liefert, ohne eine längere Fahrzeit zu liefern.

Gemäß einer Ausgestaltung des Verfahrens werden ein Innenbereich des Bearbeitungsbereichs definiert sowie ein Vorgewende, welches außenseitig des Innenbereichs angeordnet ist, wobei die Fahrroute so ermittelt wird, dass der Innenbereich nach dem Vorgewende bearbeitet wird. Sowohl der Innenbereich als auch das Vorgewende sind Teil des Bearbeitungsbereichs und müssen somit von der Landmaschine bearbeitet werden. Der Innenbereich macht bevorzugt den überwiegenden Teil der Fläche des Bearbeitungsbereichs aus. Es kann bevorzugt vorgesehen sein, dass der Innenbereich entsprechend einer Mehrzahl paralleler Fahrspuren durchfahren wird, die bevorzugt gerade ausgebildet sind und sich durch eine Ausrichtung oder Bearbeitungsrichtung charakterisieren lassen. Für den Wechsel zwischen zwei Fahrspuren werden Wendewege im Vorgewende genutzt, welches randseitig des Innenbereichs angeordnet ist. Das Vorgewende ist randseitig angeordnet und kann teilweise durch die Primär-Außengrenze begrenzt sein. Es kann zusammenhängend ausgebildet sein oder eine Mehrzahl getrennter Teilflächen aufweisen. Es kann umlaufend um den Innenbereich angeordnet sein oder es kann einen Teil der Außengrenze aussparen. Dies kann zum Beispiel sinnvoll sein, um wenigstens eine Fluchtkante oder einen Fluchtrand für Wild offen zu lassen. Der Innenbereich und das Vorgewende könnten benutzerseitig definiert werden oder sie werden automatisch definiert. Da das Vorgewende beim Bearbeiten des Innenbereichs für Wendevorgänge genutzt werden soll, wird die Fahrroute so ermittelt, dass der Innenbereich nach dem Vorgewende bearbeitet wird. Dies schließt die Möglichkeit ein, dass das Vorgewende bei Beginn der Routenplanung bereits bearbeitet wurde.

Bei der oben genannten Ausgestaltung kann eine Fahrroute - sowohl im Vorgewende als auch im Innenbereich - durch eine Mehrzahl von Variationsparametern charakterisiert werden, die im Rahmen einer Optimierung variiert werden, um die optimale Fahrroute zu finden. Es ist sinnvoll, die Anzahl der Variationsparameter zu begrenzen, um den Rechenaufwand in einem akzeptablen Rahmen zu halten. Hierbei spielt selbstverständlich die zur Verfügung stehenden Rechenkapazität eine Rolle. Eine Begrenzung der Variationsparameter bedeutet auch, dass von vornherein bestimmte Annahmen darüber gemacht werden, welche grundsätzlichen Eigenschaften eine optimale Fahrroute hat. Eine vorteilhafte Annahme besteht darin, dass die Fahrroute im Innenbereich eine Mehrzahl von parallelen Fahrspuren aufweist. Eine Fahrspur, welche auch als Bearbeitungsspur bezeichnet werden könnte, entspricht in diesem Zusammenhang einem Teil der Fahrroute der Landmaschine im Innenbereich, so dass die gesamte oder zumindest überwiegende Fläche des Innenbereichs nach und nach durch Abfahren einzelner Fahrspuren bearbeitet wird. Die Fahrspuren verlaufen parallel, das heißt der Abstand zweier benachbarter Fahrspuren ist auf ihrer ganzen Länge konstant. Zur Fahrroute gehören neben den Fahrspuren innerhalb des Bearbeitungsbereichs allerdings auch Wendewege innerhalb des Vorgewendes, wenn die Landmaschine von einer Fahrspur in eine andere wechselt.

Sofern man a priori festlegt, dass sämtliche Fahrspuren im Innenbereich parallel sind, lassen sich diese in ihrer Gesamtheit durch drei Parameter charakterisieren: die Ausrichtung, die Positionierung und die Reihenfolge. Im Falle gerader Fahrspuren entspricht die Ausrichtung einem Horizontalwinkel bzw. Azimutalwinkel, man könnte auch sagen, einer Himmelsrichtung, in welcher sämtliche Fahrspuren verlaufen. Die Ausrichtung legt allerdings nicht die Positionen der einzelnen Fahrspuren fest. Dies geschieht durch die Positionierung. Eine Möglichkeit ist, dass die Positionierung für jede Fahrspur zweidimensionale Koordinaten eines Punktes enthält, durch den die jeweilige Fahrspur führt. Zusammen mit der Ausrichtung ist somit die Anordnung der Fahrspur vollständig festgelegt. In aller Regel ist allerdings der Abstand bzw. seitliche Versatz zueinander benachbarter Fahrspuren für alle Fahrspuren identisch und entspricht einer Spurbreite. Die Spurbreite könnte - innerhalb gewisser Grenzen - ebenfalls variiert werden und somit einen weiteren Variationsparameter darstellen. Ansonsten lassen sich die Positionen sämtlicher Fahrspuren unter Kenntnis der Spurbreite durch einen einzigen Punkt einer Fahrspur festlegen, durch dessen zweidimensionalen Koordinaten die Positionierung ausgedrückt werden kann. Schließlich lässt sich die Fahrroute durch die Reihenfolge charakterisieren, in der die (durch Ausrichtung und Positionierung räumlich festgelegten) Fahrspuren durchfahren werden. Hierdurch können verschiedene Fahrstrategien dargestellt werden, beispielsweise dass die Landmaschine von einer Fahrspur in die jeweils räumlich nächste Fahrspur wechselt oder auch in die übernächste, über übernächste etc. Bspw. bei unregelmäßig geformten Bearbeitungsbereichen kann es auch sinnvoll sein, dass in einem Teilbereich ein Wechsel in die nächste Fahrspur erfolgt, während in einem anderen Teilbereich ein Wechsel in die übernächste Fahrspur erfolgt, o.ä. Hinsichtlich der Datenmenge lässt sich die Reihenfolge von N Fahrspuren durch ein N-Tupel, beispielsweise einen N-dimensionalen Vektor, ausdrücken.

Sofern die genannten drei Parameter variiert werden, sind unterschiedliche Strategien möglich. So kann zum Beispiel eine stufenweise Optimierung erfolgen. Auf einer untersten Optimierungsebene können zwei Parameter konstant gehalten werden (zum Beispiel Positionierung und Ausrichtung), während der dritte Parameter (zum Beispiel die Reihenfolge) variiert wird. Auf einer mittleren Optimierungsebene wird ein Parameter (zum Beispiel die Positionierung) konstant gehalten, während der zweite Parameter (zum Beispiel die Ausrichtung) variiert wird und für den dritten Parameter jeweils der auf der untersten Optimierungsstufe ermittelte optimale Wert eingesetzt wird. Auf einer oberen Optimierungsebene wird ein Parameter (zum Beispiel die Positionierung) variiert, während für den zweiten und dritten Parameter die auf der mittleren und unteren Optimierungsebene gefundenen optimalen Werte eingesetzt werden. Alternativ ist es auch möglich, dass auf einer oberen Optimierungsebene zwei Parameter (zum Beispiel Ausrichtung und Positionierung) gewissermaßen als gleichberechtigte Variationsparameter behandelt werden, so dass Fahrrouten verglichen werden, die sich unter Umständen in zwei Parametern unterscheiden. In einer unteren Optimierungsebene wird der dritte Parameter (zum Beispiel die Reihenfolge) variiert. Für die Bearbeitung des Vorgewendes können zum Teil ebenfalls parallele Fahrspuren angenommen werden, wobei deren Ausrichtung sich an der Grenze des Bearbeitungsbereichs orientieren kann. Allerdings sind insbesondere bei der Bearbeitung des Vorgewendes unterschiedlichste Lenkvorgänge denkbar, insbesondere in Eckbereichen des Vorgewendes. Auch kann im Vorgewende der Versatz zweier paralleler Fahrspuren einen sinnvollen Variationsparameter darstellen.

Ein mögliches Vorgehen besteht darin, die manuell gesteuerte Befahrung ausschließlich in einem Bereich durchzuführen, der für das Vorgewende vorgesehen ist. So kann das Vorgewende ganz oder teilweise manuell gesteuert befahren (und gegebenenfalls bearbeitet) werden. Danach können auf Basis der automatisch ermittelten Fahrroute der Rest des Vorgewendes - soweit nötig - und der Innenbereich bearbeitet werden. Dementsprechend wird bei einer Ausführungsform das Vorgewende derart definiert, dass der Primärbereich vollständig darin angeordnet ist. Das heißt der Primärbereich bildet das Vorgewende oder einen Teil des Vorgewendes. Umgekehrt ist der Innenbereich vollständig im Sekundärbereich angeordnet - und gegebenenfalls mit diesem deckungsgleich.

Bei der Planung der Fahrroute wird in jedem Fall der Sekundärbereich berücksichtigt, so dass dieser vollständig oder zumindest überwiegend bearbeitet werden kann. Dies ist auch ausreichend und effizient, sofern der Primärbereich beim Befahren auch bearbeitet wurde. Dies stellt sicherlich eine vorteilhafte Vorgehensweise dar, es ist allerdings nicht unabdingbar. Daher sieht eine Ausführungsform vor, dass wenn festgestellt wird, dass der Primärbereich beim Durchfahren höchstens teilweise bearbeitet wurde, die Fahrroute zur Bearbeitung des Primärbereichs und des Sekundärbereichs ermittelt wird. Das heißt die nur teilweise oder auch gar nicht durchgeführte Bearbeitung des Primärbereichs wird im Rahmen der Fahrroute nachgeholt oder fortgesetzt. Dabei wird die Fahrroute bevorzugt so bestimmt, dass der Primärbereich wenigstens überwiegend bearbeitet wird. Eine derartige Fahrroute kann erfordern, dass bereits bearbeitete Teile des Primärbereichs nochmals durchfahren werden, um unbearbeitete Teile zu erreichen oder zu verlassen.

Die Ermittlung der Sekundär-Außengrenze kann ganz oder teilweise automatisch erfolgen, also zum Beispiel durch das oben genannte Computersystem. In diesem Sinne bedeutet "automatisch", dass die entscheidenden Prozesse nicht durch menschliche Gedankentätigkeit, sondern maschinell erfolgen. Dabei können einige der nachfolgend genannten Möglichkeiten miteinander kombiniert werden, entweder indem die Zuverlässigkeit der Bestimmung durch zwei unabhängige Methoden abgesichert wird, oder aber indem ein Teil der Sekundär-Außengrenze durch eine Methode bestimmt wird und ein anderer Teil durch eine andere Methode.

Eine Ausführungsform sieht vor, dass die Sekundär-Außengrenze automatisch als Gerade zwischen Endpunkten eines konkaven Abschnitts der Primärgrenze ermittelt wird, wobei die Endpunkte die Anschlusspunkte bilden. Die Primärgrenze, oder zumindest der ermittelte Teil derselben, weist einen konkaven Abschnitt auf, man könnte auch sagen, einen zurückweichenden Abschnitt. Von außerhalb des Primärbereichs ist der genannte Abschnitt insgesamt konkav. Er ist durch Endpunkte begrenzt. "Konkav" ist in diesem Zusammenhang als Gegenteil von "konvex" zu verstehen, in dem Sinn, dass eine Verbindungslinie zwischen Punkten des konkaven Abschnitts wenigstens teilweise außerhalb des Primärbereichs liegt. Demnach kann der konkave Abschnitt konvexe oder vorspringende Teilabschnitte aufweisen. In jedem Fall sind der konkave Abschnitt und seine Endpunkte so gewählt, dass die Gerade zwischen den Endpunkten vollständig außerhalb des Primärbereichs liegt. Diese Gerade wird als Sekundär-Außengrenze bestimmt. Das heißt es wird davon ausgegangen, dass der Primärbereich den Sekundärbereich gewissermaßen umgreift oder teilweise umgibt, und dass die Sekundär-Außengrenze eine Gerade ist. Letzteres ist in der Realität für viele Flurstücke eine realistische Annahme. Diese Ausführungsform eignet sich besonders gut, wenn beim manuell gesteuerten Befahren eine Seite eines Feldes unbearbeitet bleiben soll, um einen Fluchtweg für Wild offen zu halten. Dabei kann der Primärbereich als Vorgewende oder Teil eines Vorgewendes ein U-Form aufweisen, innerhalb welcher der Sekundärbereich gewissermaßen aufgenommen ist.

Gemäß einer Ausgestaltung wird die Sekundär-Außengrenze wenigstens teilweise anhand von abgespeicherten geographischen Daten einer Umgebung des Primärbereichs automatisch ermittelt. Die "geographischen Daten" können zum Beispiel einem Satellitenfoto entsprechen, welches die Umgebung des Primärbereichs zeigt, wobei der Primärbereich selbst mit erfasst sein kann. Anhand eines Satellitenfotos könnten zum Beispiel mittels Bilderkennung die Grenzen eines Flurstücks erkannt werden. Wenn dies mit der Information verbunden wird, in welchem Flurstück der Primärbereich liegt, lässt sich die Sekundär-Außengrenze hieraus ableiten. Die geographischen Daten können aber auch zum Beispiel einer Karte, zum Beispiel Flurkarte, entnommen werden. Auch dann, wenn in einer solchen Karte Flurstückgrenzen im Prinzip eingezeichnet sind, muss dennoch die Zuordnung des Primärbereichs zu einem Flurstück automatisch vorgenommen werden und automatisch erkannt werden, welche Grenzbereiche des Flurstücks die Sekundär-Außengrenze bilden.

Eine weitere Ausführungsform sieht vor, dass eine sensorische Untersuchung der Umgebung des Primärbereichs durchgeführt wird, wobei die Sekundär-Außengrenze wenigstens teilweise anhand der Untersuchung automatisch ermittelt wird. Die sensorische Untersuchung basiert bevorzugt auf berührungslosen Sensoren, zum Beispiel optischen Sensoren wie wenigstens einer Kamera. Eine solche Kamera könnte an einer von der Landmaschine gesteuerten flugfähigen Drohne angeordnet sein, so dass innerhalb kurzer Zeit ein Überblick über die Umgebung möglich ist. Mittels der gewonnenen Sensordaten kann eine Abbildung der Umgebung erstellt werden, innerhalb welcher dann (zum Beispiel mittels Bilderkennung) Strukturen erkannt werden, die die Sekundär-Außengrenze repräsentieren. Zum Beispiel kann eine Bestandsgrenze erkannt werden oder es kann eine innerhalb des Bearbeitungsbereichs Bodenfärbung und/oder -struktur identifiziert werden, aufgrund welcher eine Grenze zu benachbarten Bereichen identifizierbar ist.

Um einerseits mögliche Fehler bei der automatschen Ermittlung korrigieren zu können, und um andererseits dem Benutzer besser in die automatisch ablaufenden Prozesse einzubinden, ist entsprechend einer Ausgestaltung vorgesehen, dass die automatisch ermittelte Sekundär-Außengrenze nach einer Bestätigung durch einen Benutzer festgelegt wird. Das heißt das Computersystem ist nicht in der Lage oder berechtigt, die automatisch bestimmte Sekundär-Außengrenze auch festzulegen, sondern es ist hierzu eine benutzerseitige Bestätigung notwendig. Der Benutzer kann die Bestätigung über eine geeignete Schnittstelle (zum Beispiel eine Maus, eine Tastatur, einen Touchscreen, ein Mikrofon etc.) eingeben. Falls er seine Bestätigung verweigert, kann ihm die Möglichkeit geben werden, die ermittelte Sekundär-Außengrenze zu korrigieren oder eine erneute automatische Ermittlung zu starten.

Es ist auch möglich, dass die Sekundär-Außengrenze wenigstens teilweise benutzerseitig festgelegt wird. Hierbei ist bevorzugt eine benutzerseitige Eingabe vorgesehen. Eine benutzerseitige Festlegung kann zum Beispiel derart erfolgen, dass dem Benutzer auf eine Bildschirm eine Darstellung der Umgebung angezeigt wird, zum Beispiel eine Sattelitenaufnahme oder eine Flurkarte. Dabei können bevorzugt der Primärbereich und/oder die ermittelte Primärgrenze mit dargestellt werden. Der Benutzer kann dann über eine Schnittstelle (zum Beispiel eine Maus, eine Tastatur, einen Touchscreen etc.) die Sekundär-Außengrenze festlegen, zum Beispiel indem er einzelne Punkte der Sekundär-Außengrenze angibt, die automatisch verbunden werden. Eine benutzerseitige Festlegung kann auch in einer Korrektur einer automatisch ermittelten Sekundär-Außengrenze bestehen.

Optional kann anhand der Positionsdaten automatisch eine Primär-Außengrenze des Primärbereichs ermittelt werden, welche zusammen mit der Sekundär-Außengrenze des Sekundärbereichs den Bearbeitungsbereich vollständig umschließt. Die Primär-Außengrenze ist derjenige Teil der Primärgrenze, der nicht die Innengrenze bildet. Sie grenzt nicht an den Sekundärbereich an und ist gewissermaßen von diesem abgewandt. Zusammen mit der Sekundär-Außengrenze bildet sie eine Gesamt-Außengrenze des Bearbeitungsbereichs. Außerdem umschließt sie zusammen mit der Innengrenze den Primärbereich vollständig. Sofern während der Befahrung des Primärbereichs eine Bearbeitung erfolgt ist, kann die Primär-Außengrenze ermittelt werden, indem bestimmt wird, welche Fläche bearbeitet wurde. Hieraus ergibt sich die Primärgrenze und somit, in Kenntnis der Innengrenze, auch die Primär-Außengrenze.

Falls keine Bearbeitung erfolgt ist, kann zum Beispiel die Primärgrenze zugrunde gelegt werden, die sich bei den gleichen Positionsdaten bei aktivem Bearbeitungsorgan ergeben hätte. Die automatisch bestimmte Primär-Außengrenze kann benutzerseitig überprüft und bestätigt oder abgelehnt werden. Die ermittlung der Primär-Außengrenze ist zum einen von Bedeutung, wenn der Primärbereich noch nicht vollständig bearbeitet wurde. Aber auch wenn dies der Fall ist, können die Primär-Außengrenze und/oder die sich hieraus ergebende Gesamt-Außengrenze für eine zukünftige Verwendung abgespeichert werden, so dass bei einer weiteren Bearbeitung - zum Beispiel durch eine andere Landmaschine, die Geometrie des Bearbeitungsbereichs von vornherein bekannt ist.

Einerseits ist es denkbar, dass die Landmaschine über ein Computersystem (das heißt eine Auswertungs- und/oder Recheneinheit) verfügt, das in der Lage ist, anhand ausreichender Informationen über den Bearbeitungsbereich sowie mögliche Zufluchtbereiche die optimale Fahrroute zu ermitteln. In vielen Fällen ist es allerdings effizienter, wenn für die Landmaschine die Fahrroute extern ermittelt wird und die Steuerdaten extern erzeugt und an die Landmaschine übermittelt werden. Die Ermittlung der Fahrroute und die Erzeugung der Steuerdaten erfolgen dann über ein zentrales System, insbesondere eine zentrale Auswerteeinheit, die sogar stationär in einem Gebäude untergebracht sein kann, das nicht einmal in der Nähe des Bearbeitungsbereichs sein muss. Durch drahtlose Kommunikation könnten die erzeugten Steuerdaten an die Landmaschine übermittelt werden, die diese dann zum Abfahren der Fahrroute nutzt. Durch die zentrale, externe Verarbeitung sind auf Seiten der Landmaschine nur wenige Ressourcen im Hinblick auf Rechenkapazität und Speicherplatz notwendig.

Es können Steuerdaten für eine autonom fahrende Landmaschine erzeugt werden, welche die Feldbearbeitung anhand der Steuerdaten autonom durchführt. Das heißt soweit dieser Landmaschine die Steuerdaten zur Verfügung stehen, kann sie ohne menschliches Eingreifen die ermittelte Fahrroute abfahren und die zugehörige Feldbearbeitung durchführen. Die Landmaschine kann zur Navigation unterschiedliche interne und/oder externe Sensoren nutzen, wobei wenigstens teilweise die gleichen Sensoren genutzt werden können wie zur Erfassung der Positionsdaten während des manuell gesteuerten Befahrens des Primärbereichs. Anhand der Sensordaten kann die Landmaschine ihre aktuelle Ist-Position feststellen und mit einer der optimalen Fahrroute entsprechenden Soll-Position vergleichen.

Es können auch Steuerdaten für eine durch einen Fahrer gelenkte Landmaschine erzeugt werden, so dass anhand der Steuerdaten Steueranweisungen für den Fahrer erzeugt werden können. Dabei können die Steuerdaten innerhalb der Landmaschine zur Verfügung stehen und in Steueranweisungen umgesetzt werden. Alternativ wäre es auch denkbar, dass anhand der Steuerdaten extern Steueranweisungen erstellt und an die Landmaschine übermittelt werden. Es ist auch denkbar, dass ein und dieselbe Landmaschine zeitweise autonom gelenkt wird und zeitweise durch einen Fahrer. Die Steueranweisungen können visuell und/oder akustisch ausgegeben werden. Die Steueranweisungen könnten den Fahrer explizit darauf hinweisen, wie er die Landmaschine zu lenken hat, oder es könnte zum Beispiel auf einem Bildschirm eine Soll-Fahrlinie angezeigt werden, anhand der sich der Fahrer orientieren kann.

Die Aufgabe wird weiterhin gelöst mit einem Computersystem zur Fahrroutenplanung für einen Feldbearbeitung, bei welcher ein Bearbeitungsbereich von der Landmaschine bearbeitet wird, wobei das Computersystem dazu eingerichtet ist, wenn ein Primärbereich des Bearbeitungsbereichs von der Landmaschine manuell gesteuert durchfahren wurde, wobei automatisch Positionsdaten der Landmaschine ermittelt wurden,

- basierend auf den Positionsdaten automatisch eine den Primärbereich umgebende Primärgrenze wenigstens teilweise zu ermitteln, und

wenn eine außerhalb des Primärbereichs angeordnete Sekundär-Außengrenze eines Sekundärbereichs festgelegt wurde, die in zwei Anschlusspunkten auf die Primärgrenze trifft, wobei ein zwischen den Anschlusspunkten liegender Teil der Primärgrenze eine Innengrenze zwischen Primärbereich und Sekundärbereich bildet, die zusammen mit der Sekundär-Außengrenze den Sekundärbereich vollständig umgibt,

- automatisch eine Fahrroute zur Bearbeitung wenigstens des Sekundärbereichs zu ermitteln, und
- automatisch Steuerdaten zur Steuerung der Landmaschine während der Feldbearbeitung zu erzeugen, wobei die Steuerdaten eine ermittelte Fahrroute repräsentieren.

Die genannten Begriffe wurden bereits oben mit Bezug auf das erfindungsgemäße Verfahren erläutert und werden daher nicht nochmals erklärt. Das Computersystem weist wenigstens einen Computer, das heißt Rechner, insbesondere eine Datenverarbeitungseinheit auf. Es kann allerdings auch weitere Komponenten aufweisen, zum Beispiel drahtlose und/oder drahtgebundene Schnittstellen zur ein- oder beidseitigen Kommunikation mit anderen Vorrichtungen. Bevorzugt ist das Computersystem dazu eingerichtet, die Positionsdaten automatisch zu erfassen und/oder die Sekundär-Außengrenze zu ermitteln. Weitere vorteilhafte Ausgestaltungen des erfindungsgemäßen Computersystems entsprechen denen des erfindungsgemäßen Verfahrens.

Insbesondere kann es sich bei dem Computersystem um ein Farm-Management-Informationssystem handeln, welches außerhalb der Landmaschine angeordnet ist, zum Beispiel stationär innerhalb eines Gebäudes. Das Computersystem könnte auch in einer mobilen Einheit (Laptop, Tablet, Smartphone etc.) angeordnet sein, welche Steueranweisungen für den Fahrer anzeigt oder Steuerdaten (normalerweise drahtlos) an die Landmaschine übermittelt. Allgemeiner gesprochen kann das Computersystem extern bezüglich der Landmaschine ausgebildet und dazu eingerichtet sein, die Steuerdaten zur Übertragung an die Landmaschine zu erzeugen. Es kann eine Schnittstelle zur Datenübertragung an die Landmaschine aufweisen und dazu eingerichtet sein, die Steuerdaten (drahtgebunden oder drahtlos) an die Landmaschine zu übertragen.

Alternativ kann das Computersystem in eine Landmaschine integriert sein, das heißt es kann ein Teil der Landmaschine sein und innerhalb dieser angeordnet sein. Das Computersystem kann in jedem Fall teilweise softwaremäßig realisiert sein.

Unabhängig davon, ob das Computersystem Teil der Landmaschine ist oder nicht, kann es eingerichtet sein, die Landmaschine entsprechend der Steuerdaten zu steuern.

Entsprechend der zweiten Alternative wird durch die Erfindung auch eine Landmaschine zur Verfügung gestellt, mit einem Computersystem zur Fahrroutenplanung für einen Feldbearbeitung, bei welcher ein Bearbeitungsbereich von der Landmaschine bearbeitet wird, wobei das Computersystem dazu eingerichtet ist, wenn ein Primärbereich des Bearbeitungsbereichs von der Landmaschine manuell gesteuert durchfahren wurde, wobei automatisch Positionsdaten der Landmaschine ermittelt wurden,

- basierend auf den Positionsdaten automatisch eine den Primärbereich umgebende Primärgrenze wenigstens teilweise zu ermitteln, und

wenn eine außerhalb des Primärbereichs angeordnete Sekundär-Außengrenze eines Sekundärbereichs festgelegt wurde, die in zwei Anschlusspunkten auf die Primärgrenze trifft, wobei ein zwischen den Anschlusspunkten liegender Teil der Primärgrenze eine Innengrenze zwischen Primärbereich und Sekundärbereich bildet, die zusammen mit der Sekundär-Außengrenze den Sekundärbereich vollständig umgibt,

- automatisch eine Fahrroute zur Bearbeitung wenigstens des Sekundärbereichs zu ermitteln, und
- automatisch Steuerdaten zur Steuerung der Landmaschine während der Feldbearbeitung zu erzeugen, wobei die Steuerdaten eine ermittelte Fahrroute repräsentieren.

Bevorzugt ist das Computersystem dazu eingerichtet, die Positionsdaten automatisch zu erfassen und/oder die Sekundär-Außengrenze zu ermitteln. Wiederum entsprechen bevorzugte Ausführungsformen der erfindungsgemäßen Landmaschine denen des erfindungsgemäßen Verfahrens.

Durch die Erfindung wird weiterhin ein Computerprogrammprodukt zur Verfügung gestellt, mit Programmcodemitteln, welche ein Computersystem befähigen, die oben beschriebenen Schritte auszuführen. Das Computerprogrammprodukt beinhaltet also eine Software, die auf der Hardware des Computersystems die genannten Schritte implementiert. Es kann in Form eines Datenträgers vorliegen, auf dem die Software, das heißt die Programmcodemittel (flüchtig oder nicht-flüchtig), gespeichert sind. Der Datenträger kann dabei auch dauerhaft in das Computersystem integriert und/oder integrierbar sein.

Im Folgenden wird die Erfindung anhand von Figuren beschrieben. Die Figuren sind lediglich beispielhaft und schränken den allgemeinen Erfindungsgedanken nicht ein. Es zeigen

Fig. 1     eine Draufsicht eines ersten Bearbeitungsbereichs, einer Landmaschine sowie eines erfindungsgemäßen Computersystems zur Fahrroutenplanung während einer ersten Phase eines erfindungsgemäßen Verfahrens;

Fig. 2     eine Draufsicht des Bearbeitungsbereichs aus Fig.1 mit der Landmaschine während einer zweiten Phase des Verfahrens;

Fig. 3     eine Draufsicht des Bearbeitungsbereichs aus Fig.1 mit der Landmaschine während einer zweiten Phase des Verfahrens;

Fig. 4     eine Draufsicht eines zweiten Bearbeitungsbereichs sowie einer Landmaschine während einer ersten Phase eines erfindungsgemäßen Verfahrens;

Fig. 5     eine Draufsicht eines dritten Bearbeitungsbereichs sowie einer Landmaschine während einer ersten Phase eines erfindungsgemäßen Verfahrens; sowie

Fig. 6     eine Flussdiagramm eines erfindungsgemäßen Verfahrens zur Fahrroutenplanung.

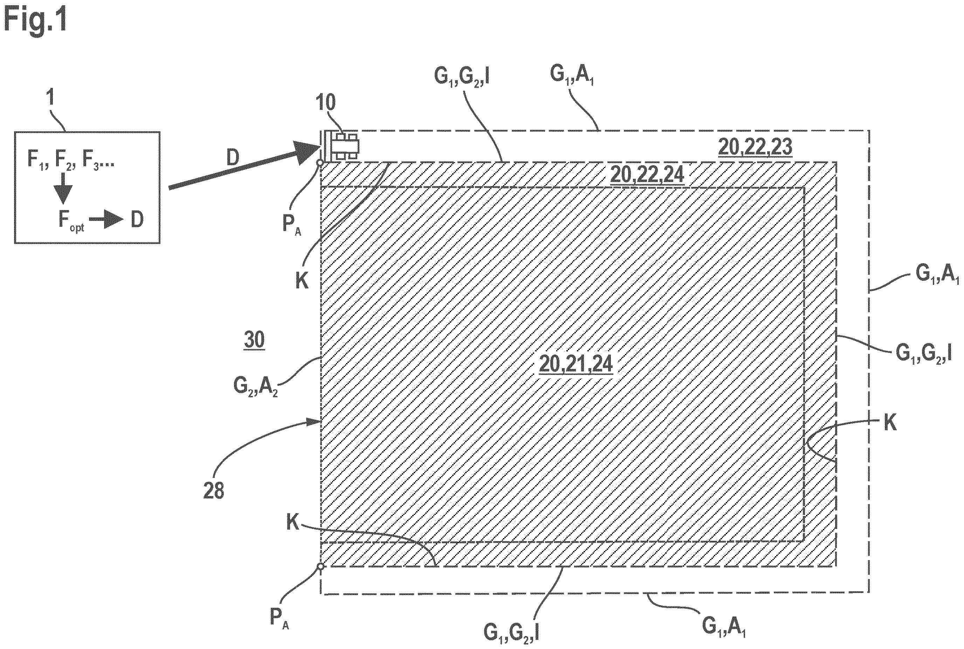

Fig. 1 zeigt eine Draufsicht eines Bearbeitungsbereichs 20, das heißt eines Feldes, welches an einen Zufluchtbereich 30 angrenzt, zum Beispiel ein Waldstück. Stark schematisiert sind eine Landmaschine 10, zum Beispiel ein Mähdrescher, sowie ein erfindungsgemäßes Computersystem 1 zur Fahrroutenplanung dargestellt, das in diesem Fall außerhalb der Landmaschine 10 angeordnet ist, beispielsweise in einem Gebäude, das weit von dem Bearbeitungsbereich 20 entfernt sein kann. Das Computersystem 1 kann durch ein Farm-Management-Informationssystem gebildet sein oder einen Teil desselben darstellen. Es weist eine hier nicht einzeln dargestellte Schnittstelle zur drahtlosen Datenübertragung an die Landmaschine 10 auf. Es ist vorgesehen, dass die Landmaschine 10 im Bearbeitungsbereich 20 einen Feldbearbeitung durchführt, beispielsweise das Mähen von Gras. Der Zufluchtbereich 33 wird als mögliches Rückzugsgebiet für Wild angesehen, welches aus dem Bearbeitungsbereich 20 flieht, wenn die Feldbearbeitung durchgeführt wird.

Zu Anfang sind die Grenzen des Bearbeitungsbereichs 20 dem Computersystem 1 nicht bekannt. Diese werden in zwei Stufen erfasst. In einer ersten Stufe durchfährt die Landmaschine 10 einen Primärbereich 23 und bearbeitet ihn währenddessen. Das heißt der in den Figuren schraffiert dargestellte Bestand wird im Primärbereich 23 abgeerntet. Die Bearbeitung erfolgt randseitig des Bestandes, wobei eine an den Fluchtbereich 30 angrenzende Fluchtkante 28 ausgespart wird. Währenddessen werden Positionsdaten erfasst, beispielsweise über einen GNSS-Empfänger innerhalb der Landmaschine 10, und an das Computersystem 1 übermittelt. Die Positionsdaten können auch Daten betreffend die Ausrichtung der Landmaschine 10 enthalten, ebenso wie Daten, aus denen hervorgeht, ob das Mähwerk in einer bestimmten Position der Landmaschine 10 aktiviert war oder nicht. Die Positionsdaten können auch dreidimensional sein, so dass beispielsweise ein Höhenprofil des Primärbereichs 23 erfasst werden kann. Durch Verknüpfung mit Daten, die die Geometrie der Landmaschine 10 beschreiben, kann die Form des bearbeiteten Primärbereich 23 mit guter Genauigkeit bestimmt werden. Das Computersystem 1 bestimmt nun automatisch eine Primärgrenze $G_1$ des Primärbereichs 23. Dabei wird erkannt, dass die Primärgrenze $G_1$ einen konkaven Abschnitt K aufweist. In der Annahme, dass die darin liegende Fläche zum Bearbeitungsbereich 20 gehört, wird ein Sekundärbereich 24 festgelegt, indem die Endpunkte des konkaven Bereichs K als Anschlusspunkte $P_A$ gewählt werden und eine gerade zwischen diesen Anschlusspunkten $P_A$ als Sekundär-Außengrenze $A_2$ des Sekundärbereichs 24 gewählt wird. Dieser automatisch Seiten des Computersystems 1 folgende Bestimmung kann durch einen Benutzer bestätigt oder abgelehnt werden. Nach der Festlegung der Sekundär-Außengrenze $A_2$ lässt sich die Primärgrenze $G_1$ in eine Primär-Außengrenze $A_1$ sowie eine zwischen den Anschlusspunkten PA liegende Innengrenze I unterteilen. Die Innengrenze I ist zwischen dem Primärbereich 23 und dem Sekundärbereich 24 zwischengeordnet, während die Primär-Außengrenze $A_1$ und die Sekundär-Außengrenze $A_2$ zusammen den Bearbeitungsbereich 20 vollständig umgeben.

Für den nunmehr vollständig bestimmten Bearbeitungsbereich 20 soll eine optimale Fahrroute $F_{opt}$ bestimmt werden, die eine bestmögliche Bearbeitungsstrategie für die bislang unbearbeiteten Bereiche darstellt. Die entsprechende Planung und Optimierung wird vom Computersystem 1 automatisch durchgeführt. Um eine realistische Planung durchführen zu können, verfügt das Computersystem 1 über Daten betreffend die Geometrie der Landmaschine 10, insbesondere eine effektive Arbeitsbreite derselben, sowie ihre Fahreigenschaften, zum Beispiel ihre Höchstgeschwindigkeit in Vorwärts- und Rückwärtsfahrt, ihren minimalen Wenderadius etc. Weiterhin können die Leistungsdaten der Landmaschine 10 in Abhängigkeit von Bodenbeschaffenheit, Gefälle oder anderen Faktoren bekannt sein, zum Beispiel eine hiervon abhängige Geschwindigkeit, ein Treibstoffverbrauch oder dergleichen.

Für die Optimierung wird ein Optimierungskriterium definiert. Dieses kann beispielsweise die Minimierung einer gesamten Fahrstrecke sein, die Minimierung einer gesamten Fahrzeit, die Minimierung eines Treibstoffverbrauchs, die Minimierung einer unbearbeiteten Fläche oder dergleichen. Es ist auch möglich, dass mehrere Teilkriterien definiert werden, zwischen denen eine gewisse Konkurrenz bestehen kann. Zum einen kann die Minimierung einer gewichteten Kombination verschiedener Optimierungswerte (zum Beispiel Fahrstrecke, Fahrzeit etc.) angestrebt werden, zum anderen kann auch eine Pareto-Optimierung hinsichtlich verschiedener Optimierungswerte durchgeführt werden.

Innerhalb des Bearbeitungsbereichs 20 werden ein Innenbereich 21 und ein Vorgewende 22 definiert. Letzteres ist U-förmig am Rand des Innenbereichs 21 angeordnet, wobei es die Fluchtkante 28 ausspart. Die Bestimmung der Unterteilung in Innenbereich 21 und Vorgewende 22 kann benutzerseitig erfolgen oder sie kann automatisch durch das Computersystem 1 durchgeführt werden.

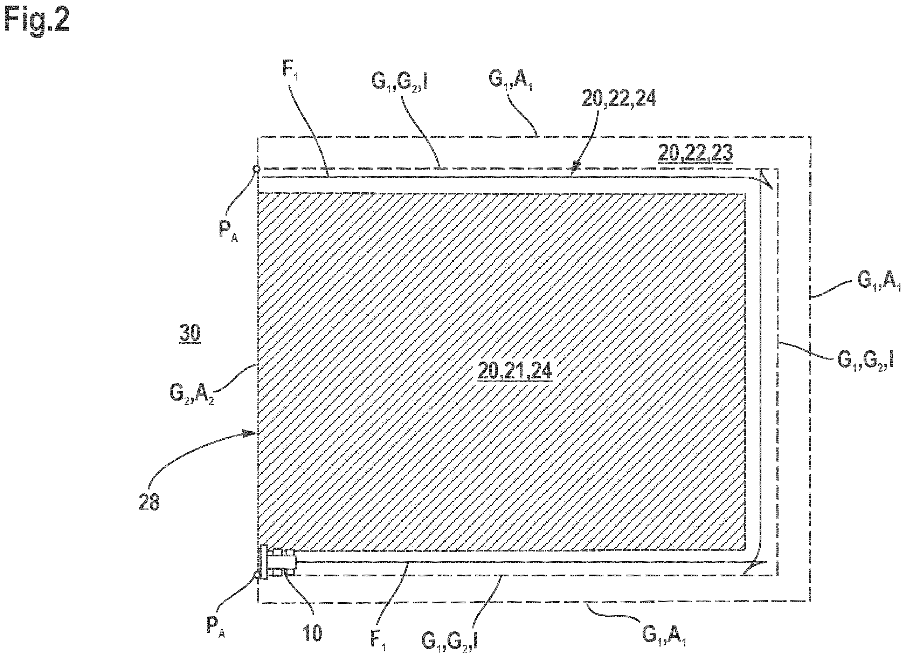

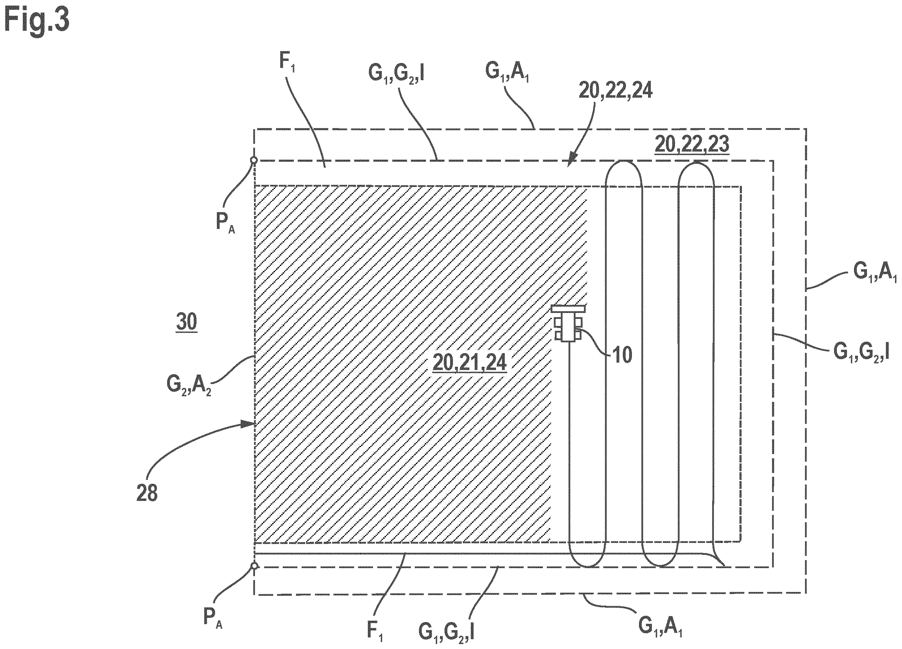

Die jeweilige Fahrroute $F_1$-$F_3$ wird so definiert, dass der Innenbereich 21 nach dem Vorgewende 22 bearbeitet wird. Fig. 2 zeigt einen Zustand, in dem die Landmaschine 10 das Vorgewende 22 vollständig bearbeitet hat, während der Innenbereich 21 noch vollständig unbearbeitet ist. Danach wird, wie in Fig. 3 dargestellt, der Innenbereich in einer Mehrzahl von parallelen Fahrspuren abgeerntet, wobei die Fahrspuren durch Wände Wege im Vorgewende 22 verbunden sind. Die Bearbeitung erfolgt hier derart, dass an einem der Fluchtkante 28 gegenüberliegenden Ende des Innenbereichs 21 begonnen wird.

Das Computersystem 1 ermittelt eine Mehrzahl von möglichen Fahrrouten $F_1$-$F_3$ und ermittelt aus diesen die gemäß dem Optimierungskriterium beste Fahrroute $F_{opt}$. Danach werden Steuerdaten D erzeugt, die der optimalen Fahrroute $F_{opt}$ entsprechend, und an die Landmaschine 10 übermittelt.

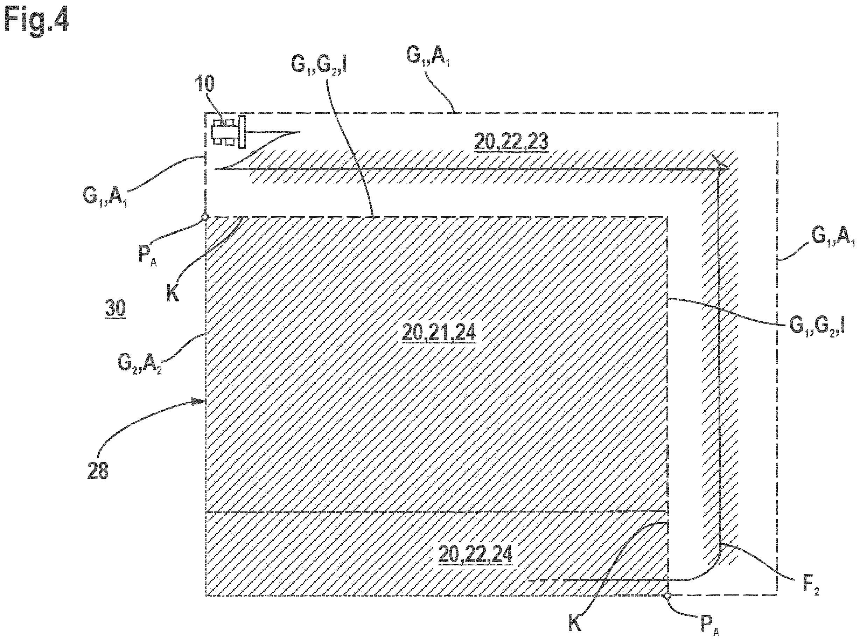

Fig. 4 zeigt ein weiteres Ausführungsbeispiel, bei welchem der Primärbereich 23 L-förmig ausgebildet ist. Außerdem wurde der Primärbereich 23 noch nicht vollständig geerntet. Aufgrund der L-Form würde eine Festlegung der Sekundär-Außengrenze $A_2$ als gerade zwischen den Anschlusspunkten $P_A$ zu einem fehlerhaften Ergebnis führen. In diesem Fall kann das Computersystem 1 beispielsweise auf geographische Daten wie ein Satellitenfoto zugreifen und mittels einer Bilderkennung die Grenzen des Bearbeitungsbereich 20 identifizieren. In Kenntnis der Primärgrenze $G_1$ kann hieraus die Sekundär-Außengrenze $A_2$ automatisch ermittelt werden. Die automatische Ermittlung kann wiederum benutzerseitig bestätigt oder abgelehnt werden. Eine andere Möglichkeit könnte darin bestehen, dass eine sensorische Untersuchung der Umgebung des Primärbereich 23 durchgeführt wird. Dies könnte beispielsweise durch eine flugfähige Drohne (nicht dargestellt) mit einer Kamera geschehen. Anhand der sensorischen Untersuchung könnte wiederum mittels Bilderkennung die Grenze des Bearbeitungsbereich 20 identifiziert werden und anhand dessen die Sekundär-Außengrenze $A_2$ bestimmt werden. Eine weitere Möglichkeit besteht darin, dass die

Sekundär-Außengrenze A_2 vollständig durch Benutzereingabe festgelegt wird. Hierzu könnte dem Benutzer beispielsweise ein Satellitenfoto dargestellt werden, in welchem die Primärgrenze $G_1$ des Primärbereichs 23 eingezeichnet ist. Über eine geeignete Schnittstelle, beispielsweise einen Touchscreen, kann der Benutzer den Verlauf der Sekundär-Außengrenze A_2 festlegen.

In dem Beispiel gemäß Fig. 4 ist der Primärbereich 23 noch nicht vollständig bearbeitet. Daher wird eine zweite Fahrroute $F_2$ so ermittelt, dass sie eine Bearbeitung des Primärbereichs 23 und des Sekundärbereichs 24 vorsieht.

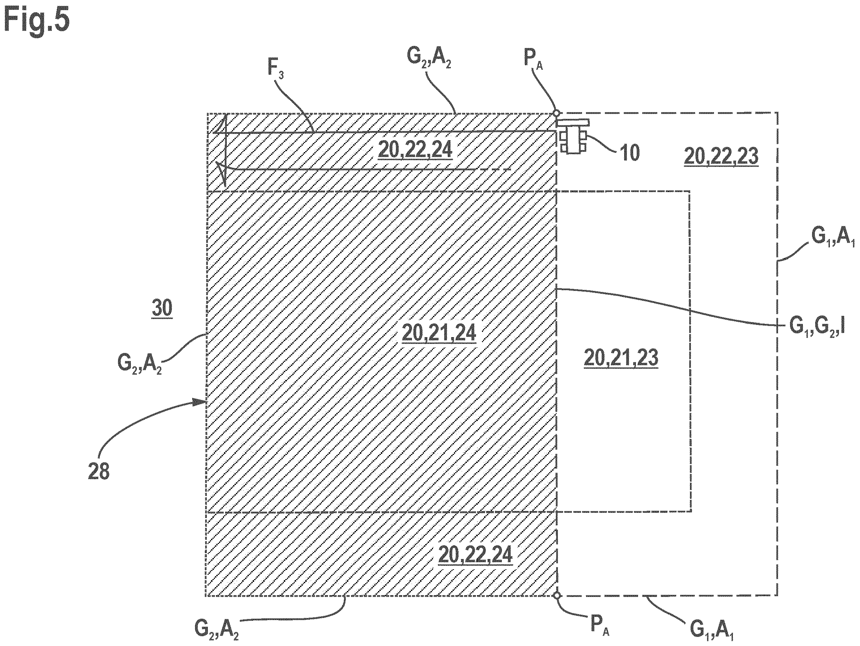

Fig. 5 zeigt ein drittes Beispiel, in welchem ein rechteckiger Primärbereich 23. in diesem Fall ist kein konkaver Bereich der Primärgrenze $G_1$ vorhanden. Die Sekundär-Außengrenze A_2 kann wiederum durch eine der mit Bezug auf Fig. 4 beschriebenen Methoden bestimmt und festgelegt werden. Danach werden wiederum der Innenbereich 21 und das Vorgewende 22 bestimmt. Im Unterschied zu den ersten beiden Beispielen ist der Primärbereich 23 in diesem Fall nicht vollständig im Vorgewende 22 angeordnet, sondern erstreckt sich auch auf den Innenbereich 21. Eine teilweise dargestellte dritte Fahrroute $F_3$ wird so geplant, dass zunächst eine Bearbeitung der verbleibenden Teile des Vorgewendes 22 erfolgt und danach erst eine Bearbeitung des verbleibenden Innenbereichs 21.

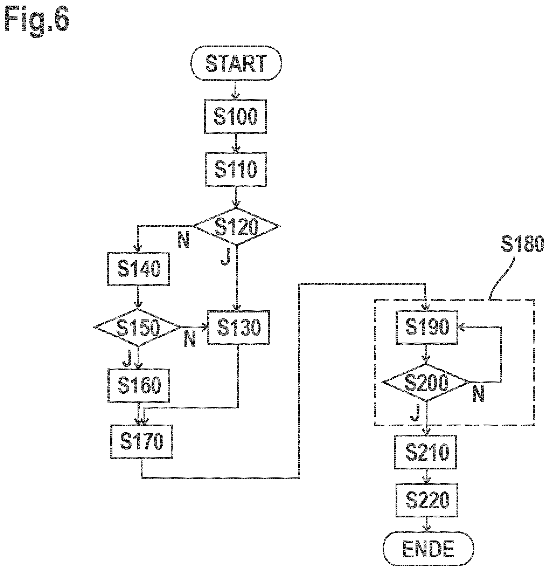

der Ablauf eines erfindungsgemäßen Verfahrens zur Fahrroutenplanung, genau gesagt zur Fahrroutenoptimierung, wird nun anhand des Flussdiagramms in Fig. 6 beschrieben. In einem ersten Schritt S100 wird der Primärbereich 23 durchfahren, wobei die Landmaschine 10 manuell gesteuert wird und Positionsdaten ermittelt werden. In einem nächsten Schritt S110 ermittelt das Computersystem 1 mithilfe der Positionsdaten die Primärgrenze $G_1$. In einem nächsten Schritt S 120 wird überprüft, ob der Benutzer die Sekundär-Außengrenze A_2 selbst festlegen möchte. Falls ja erfolgt in Schritt S 130 eine benutzerseitige Festlegung. Falls nein, wird die Sekundär-Außengrenze A_2 in einem Schritt S140 mit einer der oben beschriebenen Methoden automatisch ermittelt. In Schritt S150 wird abgefragt, ob der Benutzer die so bestimmte Sekundär-Außengrenze A_2 bestätigt. Falls nein, wird das Verfahren mit Schritt S 130 fortgesetzt. Bestätigt der Benutzer, wird in Schritt S 160 die automatische ermittelnde Sekundär-Außengrenze festgelegt. In Schritt S 170 werden der Innenbereich 21 und das Vorgewende 22 definiert. Es folgt bei S180 die eigentlich Fahrroutenoptimierung. In Schritt S 190 wird eine Fahrroute $F_1$-$F_3$ ermittelt oder geplant. In Schritt S200 wird überprüft, ob bereits die optimale Fahrroute $F_{opt}$ gefunden wurde, was in der Regel für die erste Fahrroute $F_1$ zu verneinen ist, so dass das Verfahren zu Schritt S190 zurückkehrt, wo eine weitere Fahrroute geplant wird.

Allgemein können für die einzelnen Fahrrouten $F_1$-$F_3$ unterschiedliche Parameter variiert werden, beispielsweise eine Positionierung, eine Ausrichtung sowie eine Reihenfolge der Fahrspuren im Innenbereich 21. Während in Fig. 3 die Fahrspuren parallel zur Fluchtkante 28 verlaufen, könnte auch eine andere Ausrichtung gewählt werden. Auch die Positionierung könnte verändert werden, was beispielsweise zur Folge haben könnte, dass der Innenbereich 21 nicht vollständig abgedeckt wird, dafür aber weniger Fahrspuren benötigt werden. Schließlich kann die Reihenfolge variiert werden.

Wenn in Schritt S200 entschieden wird, dass die optimale Fahrroute $F_{opt}$ gefunden wurde, ist die Optimierung beendet. Das Computersystem 1 erzeugt nun in Schritt S210 Steuerdaten D für die Landmaschine 10, die der optimalen Fahrroute $F_{opt}$ entsprechen. Sofern die Landmaschine 10 durch einen Fahrer gesteuert werden soll, können die Steuerdaten D Anweisungen für den Fahrer entsprechen, anhand derer er die Landmaschine 10 entlang der optimalen Fahrroute $F_{opt}$ steuern kann. Falls die Landmaschine 10 autonom fährt, können die Steuerdaten D explizite Fahr- und/oder Lenkkommandos für die Systeme der Landmaschine 10 beinhalten. In Schritt S220 werden die Steuerdaten D drahtlos an die Landmaschine 10 gesendet, wie in Fig. 1 angedeutet.

Um das Computersystem 1 in die Lage zu versetzen, das dargestellte Verfahren durchzuführen, kann die nötige Software als Computerprogrammprodukt, zum Beispiel als mobiler oder integrierter Datenträger zur Verfügung gestellt werden, welcher Programmcodemittel bzw. einen Programmcode aufweist, der das Verfahren auf der Hardware des Computersystems implementiert.

Gemäß einer nicht dargestellten Alternative kann das Computersystem 1 auch in die Landmaschine 10 integriert sein. In diesem Fall stehen die Steuerdaten D unmittelbar in der Landmaschine 10 zur Verfügung.

## Patentansprüche

1. Verfahren zur Fahrroutenplanung für eine Feldbearbeitung, bei welcher eine Landmaschine (10) einen Bearbeitungsbereich (20) bearbeitet, wobei

- ein Primärbereich (23) des Bearbeitungsbereichs (20) von der Landmaschine manuell gesteuert durchfahren wird, wobei automatisch Positionsdaten der Landmaschine (10) ermittelt werden (S100),
- basierend auf den Positionsdaten automatisch eine den Primärbereich (23) umgebende Primärgrenze ($G_1$) wenigstens teilweise ermittelt wird (S110),
- eine außerhalb des Primärbereichs (23) angeordnete Sekundär-Außengrenze (A_2) eines Sekundärbereichs (24) festgelegt wird (S130, S160), die in zwei Anschlusspunkten ($P_A$) auf die Primärgrenze ($G_1$) trifft, wobei ein zwischen den Anschlusspunkten ($P_A$) liegender Teil der Primärgrenze ($G_1$) eine Innengrenze (I) zwi-

schen Primärbereich (23) und Sekundärbereich (24) bildet, die zusammen mit der Sekundär-Außengrenze ($A_2$) den Sekundärbereich (24) vollständig umgibt,

- automatisch eine Fahrroute ($F_1$-$F_3$) zur Bearbeitung wenigstens des Sekundärbereichs (24) ermittelt wird (S190), und

- automatisch Steuerdaten (D) zur Steuerung der Landmaschine (10) während der Feldbearbeitung erzeugt werden (S210), wobei die Steuerdaten (D) eine ermittelte Fahrroute ($F_1$-$F_3$) repräsentieren.

2. Verfahren nach Anspruch 1, **dadurch gekennzeichnet, dass** eine automatische Optimierung der Fahrroute ($F_1$-$F_3$) durchgeführt wird (S180), indem aus einer Mehrzahl möglicher Fahrrouten ($F_1$-$F_3$) eine entsprechend einem Optimierungskriterium optimale Fahrroute ($F_{opt}$) ermittelt wird (S130), und automatisch Steuerdaten (D) erzeugt werden (S210), die die optimale Fahrroute ($F_{opt}$) repräsentieren.

3. Verfahren nach einem der vorherigen Ansprüche, **dadurch gekennzeichnet, dass** ein Innenbereich (21) des Bearbeitungsbereichs (20) definiert wird (S170) sowie ein Vorgewende (22), welches außenseitig des Innenbereichs (21) angeordnet ist, wobei die Fahrroute ($F_1$-$F_3$) so ermittelt wird, dass der Innenbereich (21) nach dem Vorgewende (22) bearbeitet wird.

4. Verfahren nach einem der vorherigen Ansprüche, **dadurch gekennzeichnet, dass** das Vorgewende (22) derart definiert wird, dass der Primärbereich (23) vollständig darin angeordnet ist.

5. Verfahren nach einem der vorherigen Ansprüche, **dadurch gekennzeichnet, dass** wenn festgestellt wird, dass der Primärbereich (23) beim Durchfahren höchstens teilweise bearbeitet wurde, die Fahrroute ($F_1$-$F_3$) zur Bearbeitung des Primärbereichs (23) und des Sekundärbereichs (24) ermittelt wird.

6. Verfahren nach einem der vorherigen Ansprüche, **dadurch gekennzeichnet, dass** die Sekundär-Außengrenze ($A_2$) automatisch als Gerade zwischen Endpunkten eines konkaven Abschnitts (K) der Primärgrenze ($G_1$) ermittelt wird (S140), wobei die Endpunkte die Anschlusspunkte ($P_A$) bilden.

7. Verfahren nach einem der vorherigen Ansprüche, **dadurch gekennzeichnet, dass** die Sekundär-Außengrenze ($A_2$) wenigstens teilweise anhand von abgespeicherten geographischen Daten einer Umgebung des Primärbereichs (23) automatisch ermittelt wird (S140).

8. Verfahren nach einem der vorherigen Ansprüche, **dadurch gekennzeichnet, dass** eine sensorische Untersuchung der Umgebung des Primärbereichs (23) durchgeführt wird, wobei die Sekundär-Außengrenze ($A_2$) wenigstens teilweise anhand der Untersuchung automatisch ermittelt wird (S140).

9. Verfahren nach einem der vorherigen Ansprüche, **dadurch gekennzeichnet, dass** die automatisch ermittelte Sekundär-Außengrenze ($A_2$) nach einer Bestätigung durch einen Benutzer festgelegt wird (S160).

10. Verfahren nach einem der vorherigen Ansprüche, **dadurch gekennzeichnet, dass** die Sekundär-Außengrenze ($A_2$) wenigstens teilweise benutzerseitig festgelegt wird (S130).

11. Verfahren nach einem der vorherigen Ansprüche, **dadurch gekennzeichnet, dass** anhand der Positionsdaten automatisch eine Primär-Außengrenze ($A_1$) des Primärbereichs (23) ermittelt wird, welche zusammen mit der Sekundär-Außengrenze ($A_2$) des Sekundärbereichs (24) den Bearbeitungsbereich (20) vollständig umschließt.

12. Verfahren nach einem der vorherigen Ansprüche, **dadurch gekennzeichnet, dass** für die Landmaschine (10) die Fahrroute ($F_1$-$F_3$) extern ermittelt wird und die Steuerdaten (D) extern erzeugt (S210) und an die Landmaschine (10) übermittelt werden (S220).

13. Verfahren nach einem der vorherigen Ansprüche, **dadurch gekennzeichnet, dass** Steuerdaten (D) für eine autonom fahrende Landmaschine (10) erzeugt werden, welche die Feldbearbeitung anhand der Steuerdaten (D) autonom durchführt.

14. Verfahren nach einem der vorherigen Ansprüche, **dadurch gekennzeichnet, dass** Steuerdaten (D) für eine durch einen Fahrer gelenkte Landmaschine (10) erzeugt werden, so dass anhand der Steuerdaten (D) Steueranweisungen für den Fahrer erzeugt werden können.

15. Computersystem (1) zur Fahrroutenplanung für einen Feldbearbeitung, bei welcher ein Bearbeitungsbereich (20) von einer Landmaschine (10) bearbeitet wird, wobei das Computersystem (1) dazu eingerichtet ist, wenn ein Primärbereich (23) des Bearbeitungsbereichs (20) von der Landmaschine (10) manuell gesteuert durchfahren wurde, wobei automatisch Positionsdaten der Landmaschine (10) ermittelt wurden (S100),

    - basierend auf den Positionsdaten automatisch eine den Primärbereich (23) umgebende Pri-

märgrenze (G$_1$) wenigstens teilweise zu ermitteln (S110), und wenn eine außerhalb des Primärbereichs (23) angeordnete Sekundär-Außengrenze (A$_2$) eines Sekundärbereichs (24) festgelegt wurde (S130, S160), die in zwei Anschlusspunkten (P$_A$) auf die Primärgrenze (G$_1$) trifft, wobei ein zwischen den Anschlusspunkten (P$_A$) liegender Teil der Primärgrenze (G$_1$) eine Innengrenze (I) zwischen Primärbereich (23) und Sekundärbereich (24) bildet, die zusammen mit der Sekundär-Außengrenze (A$_2$) den Sekundärbereich (24) vollständig umgibt,

\- automatisch eine Fahrroute (F$_1$-F$_3$) zur Bearbeitung wenigstens des Sekundärbereichs (24) zu ermitteln (S190), und

\- automatisch Steuerdaten (D) zur Steuerung der Landmaschine (10) während der Feldbearbeitung zu erzeugen (S210), wobei die Steuerdaten (D) eine ermittelte Fahrroute (F$_1$-F$_3$) repräsentieren.

16. Landmaschine (10) mit einem Computersystem (1) zur Fahrroutenplanung für einen Feldbearbeitung, bei welcher ein Bearbeitungsbereich (20) von der Landmaschine (10) bearbeitet wird, wobei das Computersystem (1) dazu eingerichtet ist, wenn ein Primärbereich (23) des Bearbeitungsbereichs (20) von der Landmaschine (10) manuell gesteuert durchfahren wurde, wobei automatisch Positionsdaten der Landmaschine (10) ermittelt wurden (S100),

- basierend auf den Positionsdaten automatisch eine den Primärbereich (23) umgebende Primärgrenze (G$_1$) wenigstens teilweise zu ermitteln (S110), und wenn eine außerhalb des Primärbereichs (23) angeordnete Sekundär-Außengrenze (A$_2$) eines Sekundärbereichs (24) festgelegt wurde (S130, S160), die in zwei Anschlusspunkten (P$_A$) auf die Primärgrenze (G$_1$) trifft, wobei ein zwischen den Anschlusspunkten (P$_A$) liegender Teil der Primärgrenze (G$_1$) eine Innengrenze (I) zwischen Primärbereich (23) und Sekundärbereich (24) bildet, die zusammen mit der Sekundär-Außengrenze (A$_2$) den Sekundärbereich (24) vollständig umgibt,

\- automatisch eine Fahrroute (F$_1$-F$_3$) zur Bearbeitung wenigstens des Sekundärbereichs (24) zu ermitteln (S190), und

\- automatisch Steuerdaten (D) zur Steuerung der Landmaschine (10) während der Feldbearbeitung zu erzeugen (S210), wobei die Steuerdaten (D) eine ermittelte Fahrroute (F$_1$-F$_3$) repräsentieren.

17. Computerprogrammprodukt mit Programmcodemitteln, welche ein Computersystem (1) befähigen, die in Anspruch 15 beschriebenen Schritte durchzuführen.

Fig.1

Fig.2

Fig.3

Fig.4

EP 4 492 181 A1

# Fig.5

$F_3$

$G_2, A_2$    $P_A$

20,22,24    10    20,22,23

$G_1, A_1$

30

$G_2, A_2$

20,21,24    20,21,23    $G_1, G_2, I$

28

20,22,24

$G_2, A_2$    $P_A$    $G_1, A_1$

EP 4 492 181 A1

Fig.6

**EUROPÄISCHER RECHERCHENBERICHT**

**Nummer der Anmeldung**

EP 24 17 7892

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 111 343 853 A (KUBOTA KK) 26. Juni 2020 (2020-06-26) * Seite 10 - Seite 25 * ----- | 1-17 | INV. G05D1/20 |
| A | WO 2022/244435 A1 (KUBOTA KK [JP]) 24. November 2022 (2022-11-24) * Absatz [0038] - Absatz [0296] * ----- | 1-17 | |
| A | JP 2022 173643 A (YANMAR HOLDINGS CO LTD) 22. November 2022 (2022-11-22) * Absatz [0035] - Absatz [0071] * ----- | 1-17 | |

**RECHERCHIERTE SACHGEBIETE (IPC)**

G05D

Der vorliegende Recherchenbericht wurde für alle Patentansprüche erstellt

| Recherchenort | Abschlußdatum der Recherche | Prüfer |
|---|---|---|
| München | 4. Oktober 2024 | Coda, Ruggero |

EP 4 492 181 A1

## ANHANG ZUM EUROPÄISCHEN RECHERCHENBERICHT
## ÜBER DIE EUROPÄISCHE PATENTANMELDUNG NR.

EP 24 17 7892

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-10-2024

| Im Recherchenbericht angeführtes Patentdokument | Datum der Veröffentlichung | Mitglied(er) der Patentfamilie | Datum der Veröffentlichung |
|---|---|---|---|
| CN 111343853 A | 26-06-2020 | CN 111343853 A | 26-06-2020 |
| | | KR 20200096491 A | 12-08-2020 |
| WO 2022244435 A1 | 24-11-2022 | AU 2022278136 A1 | 23-11-2023 |
| | | EP 4342273 A1 | 27-03-2024 |
| | | JP WO2022244435 A1 | 24-11-2022 |
| | | US 2024081167 A1 | 14-03-2024 |
| | | WO 2022244435 A1 | 24-11-2022 |
| JP 2022173643 A | 22-11-2022 | KEINE | |

Für nähere Einzelheiten zu diesem Anhang : siehe Amtsblatt des Europäischen Patentamts, Nr.12/82